(19) Europäisches Patentamt / European Patent Office / Office européen des brevets

(11) **EP 4 363 877 B1**

(12) **EUROPEAN PATENT SPECIFICATION**

(45) Date of publication and mention
of the grant of the patent:
**18.03.2026 Bulletin 2026/12**

(21) Application number: **22736346.2**

(22) Date of filing: **29.06.2022**

(51) International Patent Classification (IPC):
*G01S 3/14* (2006.01)    *G01S 5/00* (2006.01)
*G01S 13/86* (2006.01)    *G01S 13/91* (2006.01)
*G08G 3/00* (2006.01)    *G06V 20/52* (2022.01)

(52) Cooperative Patent Classification (CPC):
**G01S 13/86; G01S 3/14; G01S 5/0009;**
**G01S 13/867; G01S 13/917; G06V 10/143;**
**G06V 10/761; G06V 20/17; G08G 3/00**

(86) International application number:
**PCT/GB2022/051669**

(87) International publication number:
**WO 2023/275544 (05.01.2023 Gazette 2023/01)**

(54) **METHODS AND SYSTEMS FOR DETECTING VESSELS**

VERFAHREN UND SYSTEME ZUR ERKENNUNG VON GEFÄSSEN

PROCÉDÉS ET SYSTÈMES DE DÉTECTION DE NAVIRES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **29.06.2021 GB 202109319**

(43) Date of publication of application:
**08.05.2024 Bulletin 2024/19**

(73) Proprietor: **Sirius Constellation Limited**
**Chiddingfold Nr Godalming, GU8 4SN (GB)**

(72) Inventors:
• **GLAISTER, Malcolm**
**Godalming GU8 4SN (GB)**
• **DOHLER, Michael**
**Kingston KT2 5SD (GB)**

(74) Representative: **Carpmaels & Ransford LLP**
**One Southampton Row**
**London WC1B 5HA (GB)**

(56) References cited:
EP-A1- 3 109 659        WO-A2-2011/138744
US-A1- 2017 168 133

## Description

## Field of the Invention

The invention relates to methods and systems for detecting vessels. In particular, the fusion of data collected by multiple detectors, or sensors, is used to increase the accuracy and reliability of the detection of vessels at sea.

## Background

The detection of vessels, or ships, at sea has a number of important applications, including for maritime security, border control, monitoring of cargo shipping, traffic analysis, monitoring of fishing activities, monitoring and detection of criminal activity, collision prevention and accident investigation.

Vessels at sea can be detected by a number of methods, such as with the use of radar detectors, optical imaging (including visible light and infrared imaging), or the Automatic Identification System (AIS). Radar and AIS typically provide good spatial resolution for a vessel detection, and optical imaging advantageously allows for evaluation of visual aspects of a vessel. However, each detection method is not always reliable or suitable in all conditions and circumstances. For example, optical imaging and radar detection are adversely affected by poor weather conditions. In particular, wind and waves can affect radar detection. Inclement weather conditions and low light conditions can obstruct visibility for a camera, such that optical imaging detections may be difficult or impossible. Furthermore, AIS detection may not be an option for vessels that are not required to transmit on AIS. AIS can also be an unreliable detection method, as it can also be turned off and, as an unencrypted system, is vulnerable to threats such as spoofing, hijacking and availability disruption.

Detection of vessels may also be achieved by the detection of radio frequency (RF) signals. However, such detection methods typically suffer from poor spatial resolution, and are also affected by weather conditions.

As mentioned above, detection of vessels with optical imaging, particularly with visible light captured by a camera sensor, can be particularly challenging in low light or night time conditions when visibility is low. Computer vision techniques can be used to take features from image data and identify or classify objects within the image. However, low light images create unfavourable conditions for traditional object detection algorithms, as the number of features in the image is greatly reduced. For instance, in an image of the sea taken from the shore, the horizon line may not be visible at night, and the outline of a vessel may not be visible.

Low-Light Image Enhancement (LIME) algorithms may be used to artificially brighten images captured in low light conditions, in order to reveal more features that may be used by object detection algorithms.

However, such an approach typically results in a poor signal-to-noise ratio in the artificially brightened image, such that vessels, particularly in more distant regions, cannot be detected reliably.

Accordingly, an aim of the present invention is to provide a method and system for accurately and reliably detecting vessels, and which overcomes the challenges associated with known detection methods.

Furthermore, an aim of the present disclosure is to provide a method and system for accurately and reliably detecting vessels in low light or night conditions.

WO 2011/138744 A2 describes an Automatic Identification System (AIS) message verification device. The device includes a remote sensing device, an AIS receiver, a processing unit, a communication port. The remote sensing device is used for producing observation information of a vessel. The AIS receiver is used for receiving AIS data of the vessel. The processing unit is used for verifying the vessel AIS data using the vessel observation information. The communication port is used for sending an alert about the AIS data when a verification mismatch occurs.

EP 3 109 659 A1 describes a system and process for searching and tracking illegal fishing vessels.

US 2017/168133 A1 describes a system and a method for identifying and tracking unacknowledged marine vessels. The system includes a sensing system having one or more observation platforms positioned remotely above one or more marine vessels, each with a navigation system, and one or more payloads coupled to the observation platform(s). The payloads have one or more optical receivers to observe, geolocate, and receive optical emissions from the marine vessels to detect optical signatures. The payloads have one or more AIS receivers to observe, geolocate, and receive AIS emissions from the marine vessels to detect AIS signatures. The payloads have one or more RF receivers to receive RF emissions from the marine vessels to detect RF signatures. The payloads have at least one processor with an analysis software to process and analyze the optical, AIS, and RF signatures, to identify and track one or more unacknowledged marine vessels from the marine vessels.

## Summary

The invention is defined by the appended set of claims. According to a first aspect of the invention there is provided a computer implemented method for detecting vessels, the method comprising: determining if a match exists between an object detection from each of two or more detectors, based on data obtained by the two or more detectors, wherein the two or more detectors comprise: an RF antenna; and a radar detector and/or an Automatic Identification System (AIS) receiver, wherein the RF antenna comprises a plurality of RF antennas, and wherein the plurality of RF antennas are arranged with a plurality of adjacent detection ranges, wherein it is determined that a vessel is detected if it is determined that the match exists, wherein the step of determining if a match exists comprises: determining if an RF signal has been detected in two or more of the plurality of adjacent detection ranges based on the data obtained by the plurality of RF antennas; and identifying a potential vessel track that corresponds to the detected RF signal in the two or more of the plurality of adjacent detection ranges, wherein the potential vessel track is indicated by the data obtained by the radar detector and/or the AIS receiver.

In other words, each of two or more detectors, or sensors, may detect an object, which may be a vessel. By fusing data from multiple detectors and determining if there is a match, or consensus, between the detections of objects, the present invention advantageously is able to determine if the detections correspond to vessels with greater reliability and a greater degree of confidence. Furthermore, the advantages of each detector type, such as spatial resolution or the type of information that is acquired by that detector, may be harnessed, whilst the drawbacks associated with each individual detection method, such as the risks associated with adverse weather conditions, spoofing, or hijacking, may be of less significance given the broader fusion of data.

Although several detectors may be present, not all may detect the same object, such as due to unfavourable conditions or visibility. As such, a vessel may be detected if two of the detectors provide a matching object detection. Alternatively, a vessel may be detected if three or more of the detectors have consensus, or a matching object detection. A greater number of matching detections allows for a greater degree of confidence that a vessel has been detected, and provides more information about the vessel, such as its position, vessel type, track, and heading. The detection of the vessel may be outputted, such as on a display, which may also include the aforementioned information acquired by the detectors.

Two detectors may be used. Preferable combinations of two detectors include: an AIS receiver and a radar detector; an AIS receiver and a light sensor; an AIS receiver and an RF antenna; a radar detector and a light sensor; and a radar detector and an RF antenna. Three detectors may be used. Preferable combinations of three detectors include: an AIS receiver, a radar detector, and a light sensor; an AIS receiver, a radar detector, and an RF antenna; an AIS receiver, a light sensor, and an RF antenna; and a radar detector, a light sensor, and an RF antenna. Four detectors may be used, preferably: an AIS receiver, a radar detector, a light sensor and an RF antenna.

The two or more detectors may also include a microphone, which can detect vessels according to the sound signature of a motor of the vessel, which can be compared against a dataset of known sound signatures for different vessel motor types.

The light sensor may comprise an optical sensor or image sensor, such as a charge-coupled device (CCD). The image sensor may be suitable for visible light, infrared or thermal imaging. The RF antenna may comprise a Wi-Fi antenna, a VHF antenna, a software-defined radio (SDR) antenna, and/or a cellular antenna. The radar detector may comprise a terrestrial radar detector and/or a synthetic-aperture radar (SAR) detector.

The match may be in respect of position, bearing relative to the detectors, speed, size, and/or heading of the object. Multiple such match determinations may be made in order to increase confidence in a vessel detection. The "object" refers to that which is detected in the object detection.

Data from each detector may be fused, or combined, in order to determine, or estimate, attributes of the object, or potential vessel, and to determine if a match exists with the attribute as determined by one of the detectors. For example, data from two or more detectors may be combined to estimate an object size, or potential vessel size. The estimated size may be compared against an object or vessel size determination or estimate from another detector.

The step of determining if a match exists may comprise: determining an object position associated with each object detection based on the data obtained by the respective detector of the two or more detectors; and determining if two or more of the determined object positions associated with each object detection correspond to within a predetermined position threshold level.

The predetermined position threshold level may be 500m. In other words, it is determine if two or more of the determined object positions are within 500m of each other. Alternatively, the predetermined position threshold level may be 100m, 300m, or 1000m.

The step of determining if a match exists may comprise: determining an object speed associated with each object detection based on the data obtained by the respective detector of the two or more detectors; and determining if two or more of the determined object speeds associated with each object detection correspond to within a speed threshold level.

The speed threshold level may be 25% of the maximum of the determined object speeds. In other words, it is determine if two or more of the determined object speeds differ by less than 25% of the greater of the two or more determined object speeds. Alternatively, the speed threshold level may be 10%, 15%, 20% or 30% of the maximum of the determined object speeds.

The step of determining if a match exists may comprise: determining an object heading associated with each object detection based on the data obtained by the respective detector of the two or more detectors; and determining if two or more of the determined object headings associated with each object detection correspond to within a predetermined heading threshold level.

The heading refers to the direction in which the object, or vessel, is pointing with respect to North.

The predetermined heading threshold level may be 45°. In other words, it is determined if two or more of the determined object headings are within 45° of each other. Alternatively, the predetermined heading threshold level may be 20°, 30°, or 50°.

The step of determining if a match exists may comprise: determining an object bearing associated with each object detection based on the data obtained by the respective detector of the two or more detectors, wherein the object bearing is relative to the two or more detectors; and determining if two or more of the determined object bearings associated with each object detection correspond to within a predetermined bearing threshold level.

The bearing refers to the bearing, or angle, relative to a centre line of detection of the detector, or array of detectors (i.e. the two or more detectors).

The predetermined bearing threshold level may be 10°. In other words, it is determined if two or more of the determined object bearings relative to the detectors are within 10° of each other. Alternatively, the predetermined bearing threshold level may be 5°, 15°, or 20°.

The step of determining if a match exists may comprise: determining an object track associated with each object detection based on the data obtained by the respective detector of the two or more detectors; and determining if two or more of the determined object tracks associated with each object detection correspond to within a predetermined track threshold level during a predetermined time interval.

The predetermined track threshold level may be 500m. In other words, it is determined if two or more of the determined object tracks remain within 500m of each other throughout a predetermined time interval. Alternatively, the predetermined track threshold level may be 750m, 250m or 100m. The predetermined time interval may be 10 minutes. Alternatively, the predetermined time interval may be 30 minutes.

The RF antennas may be directional antennas. The plurality of adjacent detection ranges may overlap.

The RF signal may be associated with a Wi-Fi access point and/or a mobile phone, or cellular, signal from aboard a vessel. Advantageously, the RF signal may carry a unique identifier, such as a Wi-Fi access point SSID, or a MAC address, which may be assigned to a detected vessel, tracked, stored and/or compared against historic data. In particular, the identifier of a detected RF signal may be compared against a database of historic matches, in order to increase confidence in a vessel detection.

The step of identifying a potential vessel track that corresponds to the detected RF signal in the two or more of the plurality of adjacent detection ranges may comprise: determining that the potential vessel track corresponds to a time and/or a position of the detection of the RF signal in each of the two or more of the plurality of adjacent detection ranges.

Determining that the potential vessel track corresponds to a time and/or a position of the detection of the RF signal in each of the two or more of the plurality of adjacent detection ranges may include determining that the detection of the RF signal corresponds in time to the potential vessel track as indicated by radar detector and/or AIS receiver, that the trajectory or direction of travel corresponds, and/or that the position corresponds to within a predetermined threshold level, such as 500m.

The two or more detectors may comprise: a light sensor; and the AIS receiver. The step of determining if a match exists may comprise: estimating an object size based on a pixel width of the object in image data captured by the light sensor and based on a heading of the object as indicated by the data obtained by the AIS receiver; and determining if the estimation of the object size matches a vessel size of the object as indicated by the data obtained by AIS receiver.

In other words, an AIS receiver may provide data indicating a vessel's heading. Combined with the pixel width of a vessel (i.e. the width of the vessel in terms of the number of pixels across the width of the vessel in the image) as determined by a light sensor, or camera, the size of the vessel may be estimated or resolved. A vessel that is side-on to the camera's line of sight will have a larger pixel width than if the vessel is oriented at another angle. The pixel width of the vessel may be estimated using various computer vision techniques, such as with edge detection algorithms. The correspondence between pixel width in the image and physical width may be determined, or set, by calibration. The vessel size estimation may be compared against a vessel size as indicated by AIS, to determine if they match. Thus, it may be determined if the object detected by the light sensor, or camera, corresponds to the vessel indicated by AIS. Multiple spaced apart cameras may also be used to estimate the distance to the vessel by parallax, which may also be used to estimate the vessel size from the pixel width. This match type may be combined with other match types to increase confidence in a detection. By fusing data from multiple sources, the confidence in vessel detections may be increased.

Having detected the vessel, the method further may further comprise: instructing the two or more detectors to obtain further data on the vessel; and verifying the detection of the vessel and/or tracking movement of the detected vessel based on the obtained further data; and/or instructing a further detector positioned in the trajectory of the vessel to obtain subsequent data in respect of the vessel, and tracking movement of the detected vessel based on the subsequent data.

Accordingly, a vessel which is identified but which is unexpected or is of concern may be tracked and monitored.

Upon detecting the vessel, the method may further comprise: triggering an audible and/or visual alert; sending a message to an operator; tasking another detector to search for the vessel; and/or instructing a drone to investigate the vessel. The detection of a vessel may be outputted on a display, and information determined about that vessel, such as its type, position, track and/or heading, may be presented on the display.

According to a second aspect of the invention there is provided a system comprising: a processor configured to carry out any of the methods described above; and the two or more detectors.

The two or more detectors may be shore based, mounted on a vehicle, mounted on a drone, and/or mounted on a buoy. The two or more detectors may be configured to detect in a predetermined area of the sea. Each detector may be provided on a pan-tilt zoom mount.

According to a third aspect of the present disclosure there is provided a computer implemented method for detecting the presence of vessels, the method comprising: detecting a plurality of blobs within image data; applying an image mask to the image data to remove regions of the image data that are associated with having static objects and to retain the remaining portions of the image data; identifying one or more clusters of the detected plurality of blobs within the retained remaining portions of the image data; determining the presence of one or more vessels based on the one or more identified clusters.

Blob detection refers to the imaging processing technique of identifying regions of image data that differ in properties, such as brightness or colour, relative to the background or surrounding regions. For instance, a blob may be a bright region against a dark background.

Image masking may be used to set pixel values in certain regions of an image to have a particular value, such as zero, in order to retain desired parts of an image. In this way, false detections which may occur in regions where a vessel would not be expected, such as in the sky or on land (e.g. due to lights from a city), can be avoided. In other words, the image mask may be used to retain the portions of the image data corresponding to the sea, and to remove all other regions (such as the sky, land, piers etc.).

The image data may be visible light image data or infrared or thermal image data captured by a camera.

Clustering refers to the identification of closely spaced or nearby blobs, which may be from the same object. For instance, a number of light sources may be present on a single vessel, with each light source resulting in a detection of a blob.

Advantageously, the method allows for vessels to be detected, including in low light or night conditions.

The step of determining the presence of one or more vessels based on the one or more clusters may comprise determining if the one or more clusters have one or more of a size, shape, speed and/or track that is indicative of a vessel. For example, a cluster having a track, or trajectory, along a known shipping lane is likely to be a vessel.

The step of determining if the one or more clusters have one or more of a size, shape, speed and/or track that is indicative of a vessel may comprises comparing the size, shape, speed and/or track of the one or more identified clusters with a data set of corresponding size, shape, speed and/or track data respectively, wherein the data set is associated with multiple types of vessels. The data set may be stored in a database.

The speed and/or track of the one or more clusters may be determined based on the movement of the one or more clusters between subsequent captured frames in the image data.

Having determined the presence of one or more vessels, the method may further comprise drawing a bounding box around each of the one or more vessels in an image represented by the image data.

The step of detecting the plurality of blobs may comprise applying a Laplacian of Gaussian algorithm to the image data. Advantageously, the Laplacian of Gaussian algorithm is robust against variations in lighting and weather conditions. Alternatively, algorithms based on the difference of Gaussians, the determinant of the Hessian, or the hybrid Laplacian and determinant of the Hessian operator approaches may be used.

The step of identifying the one or more clusters may comprise applying a Density Based Spatial Clustering of Applications and Noise (DBSCAN) algorithm. Such an algorithm identifies a set blobs that are closely spaced, and which can be in any shape. Advantageously, the DBSCAN algorithm is robust to outliers.

The parameters of the Laplacian of Gaussian algorithm and/or the Density Based Spatial Clustering of Applications and Noise (DBSCAN) algorithm may be tuned by maximising an F-score based on supervised learning on a labelled dataset. The F-score may be the $F_1$ score. Such tuning may also be used for any other appropriate blob detection or clustering algorithm, as described above.

The regions of the image data that are associated with having static objects may include foreground regions, sky regions and/or land based regions. Accordingly, the image mask may be applied to remove sky regions, land regions, a pier and/or a port area. Consequently, false detections, which could arise from an aircraft, the moon or stars, or shore based light sources such as a city, may be avoided, whilst the method can identify vessels at sea.

Such an image mask may be predetermined based on the image captured at a fixed location, to remove the known shore and sky regions, for example. At night, or in low light conditions, the horizon line may not be visible or discernible in the captured image. Alternatively, the image mask may be dynamic and adaptable, and may be determined with machine learning techniques.

According to a fourth aspect of the invention there is provided a system comprising: a processor configured to carry out the method described above according to the third aspect of the invention; and a detection module configured to capture the image data and transmit the image data to the processor.

According to a fifth aspect of the invention there is provided a computer-readable medium comprising instructions which, when executed by a computer, cause the computer to carry out the any method as described above.

As the skilled person will appreciate, the methods and systems of the present invention advantageously overcome the previously mentioned challenges, of reliably and accurately detecting vessels in challenging conditions, including poor weather conditions, and in low light or at night time.

**Brief Description of the Drawings**

The present disclosure can be understood with reference to the description of the embodiments set out below, in conjunction with the appended drawings in which:

Figure 1 is a schematic diagram of a system according to an embodiment of the invention.

Figure 2 is a flow diagram of a method according to an embodiment of the invention.

Figure 3 is a plan view of RF based vessel detection according to an embodiment of the invention.

Figure 4 is a flow diagram of match determination according to an embodiment of the invention.

Figure 5a is a plan view of vessel detection, using a detector array including a camera, according to an embodiment of the invention.

Figure 5b is a schematic diagram of vessel size estimation.

Figure 6 is a flow diagram of fusion and match determination according to an embodiment of the invention.

Figure 7 is a flow diagram of a method of vessel detection according to an aspect of the present disclosure.

Figure 8 is a schematic diagram of a method of vessel detection, including image masking, according to an aspect of the present disclosure.

**Detailed Description**

*EM Fusion*

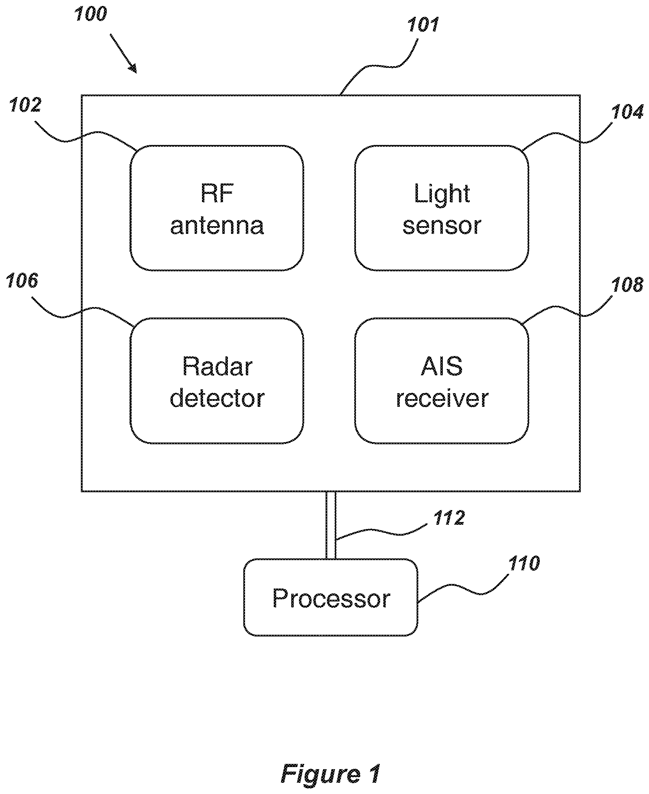

Figure 1 illustrates a system 100 according to an embodiment of the invention. The system 100 includes a detector array 101 which, in this embodiment, includes an RF antenna 102, a light sensor 104, a radar detector 106, and an AIS receiver 108. In the preferred embodiment, the light sensor 104 is a camera for capturing images. Such images may be conventional visible light images, infrared or thermal images. In this example, the detector array is positioned on a shore based mount to monitor an area of the sea, in order to detect vessels.

The system 100 further includes a processor 110 in communication with the detector array via communication bus 112, in order to receive and process the data obtained by the detectors. In this example, the processor 110 is provided at the same location as the detector array 101, as part of a local computing device. The processor 110 may instead be provided as part of a remotely located computing system or cloud computing system, with data transmitted thereto by communication over the internet, or an intranet.

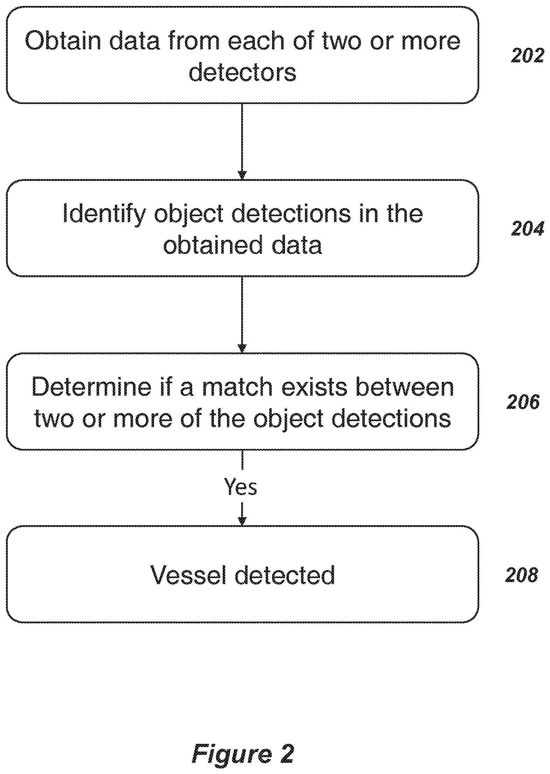

The method that is performed by the processor 110 is now described in connection with Figure 2.

Firstly, the processor receives data that is obtained by the detectors positioned to monitor the sea 202. Each detector may detect an object, or potential vessel, and any such detections are identified by the processor based on the obtained data 204. The processor then determines if any of the object detections match or, in other words, if there is consensus between the object detections 206. The match may be in respect of one or more attributes, such as the position, bearing relative to the detectors, speed, track, size, and/or heading of the object that has been detected. If a match is determined to exist at step 206, it is determined that a vessel has been detected 208.

It has been found that identifying matches between object detections from detectors of different types advantageously enables more reliable vessel detection, with a greater degree of confidence that a vessel has been detected, and with fewer false detections. The more attributes that are compared for matches, the greater the degree of confidence in the detection. Furthermore, shortcomings with individual detector types, such as poor performance in adverse weather conditions, and poor spatial resolution, can be largely overcome by fusing data from multiple sources or detector types.

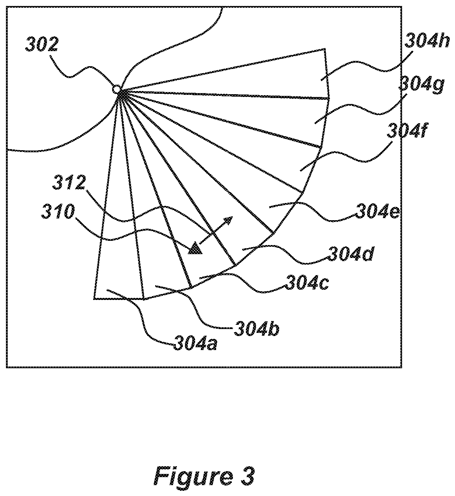

Figure 3 illustrates an exemplary embodiment in accordance with the claimed invention, in which the detector array includes an RF antenna 302 and a radar detector or AIS receiver (not shown). The RF antenna is an array of directional RF antennas arranged with multiple adjacent detection ranges or sectors 304a-h. Alternatively, the RF antenna array may use omnidirectional RF antennas which may be made to be directional using software.

In the exemplary embodiment, the RF antenna scans for Wi-Fi access points aboard vessels. By identifying a detection range, or sector 304a-h, in which a Wi-Fi access point is detected, an estimation of the bearing or position of an object, or potential vessel 310, can be made. Signal strength can also be used as an indication of distance from the antenna. The object's movement 312 causes the Wi-Fi access point to be detected in multiple detection ranges subsequently, such that the track, or trajectory of the object 312 can be estimated and monitored.

The estimated track, or trajectory, may be compared to the track associated with an object detection, or potential vessel detection, as indicated by the radar detector or the AIS receiver. In other words, Wi-Fi access points are matched to AIS or radar indicated trajectories. If the comparison indicates that the tracks match, or correspond, such that the positions of the object correspond over a given time period, it is determined that a vessel has been detected.

The determination that the positions correspond may be achieved by determining if the correspondence of positions is to within a threshold level, which may be associated with the width of the detection range at the object detection distance from the detector indicated by the radar detector or AIS receiver. Alternatively, a predetermined position correspondence threshold may be used, which may be 500m.

The data from each detector may then be stored in respect of that particular vessel, giving a broader range of information on that vessel than is possible with a single detector, and which may be compared against for future detections. The RF signal may provide a unique identifier such as a MAC address or Wi-Fi SSID, which may be stored in respect of a particular vessel. Subsequent detections can then be matched against such a unique identifier, allowing all known information about the vessel to be rapidly retrieved.

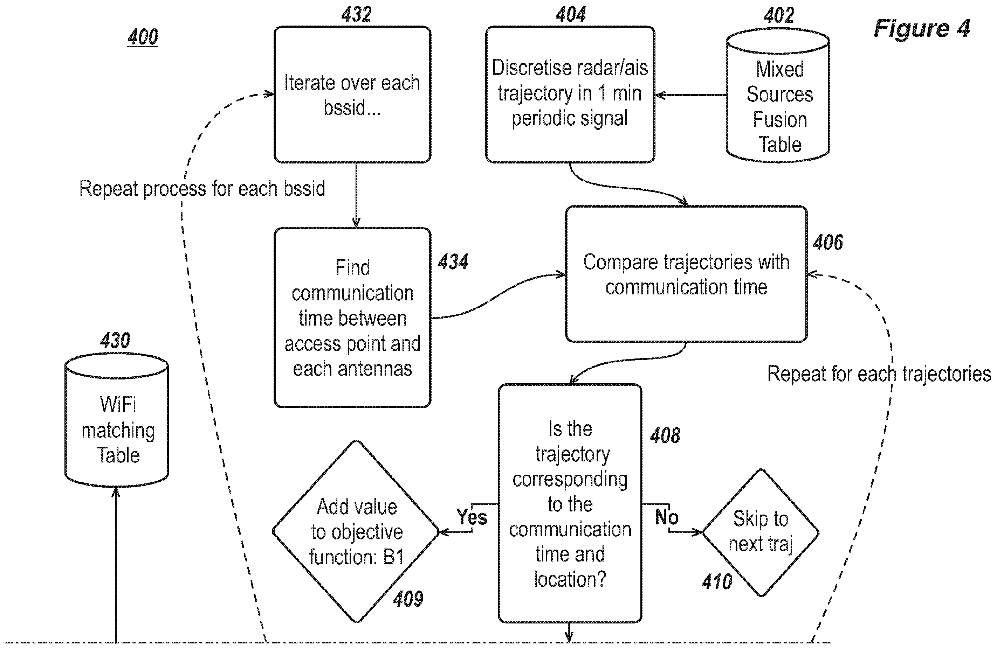

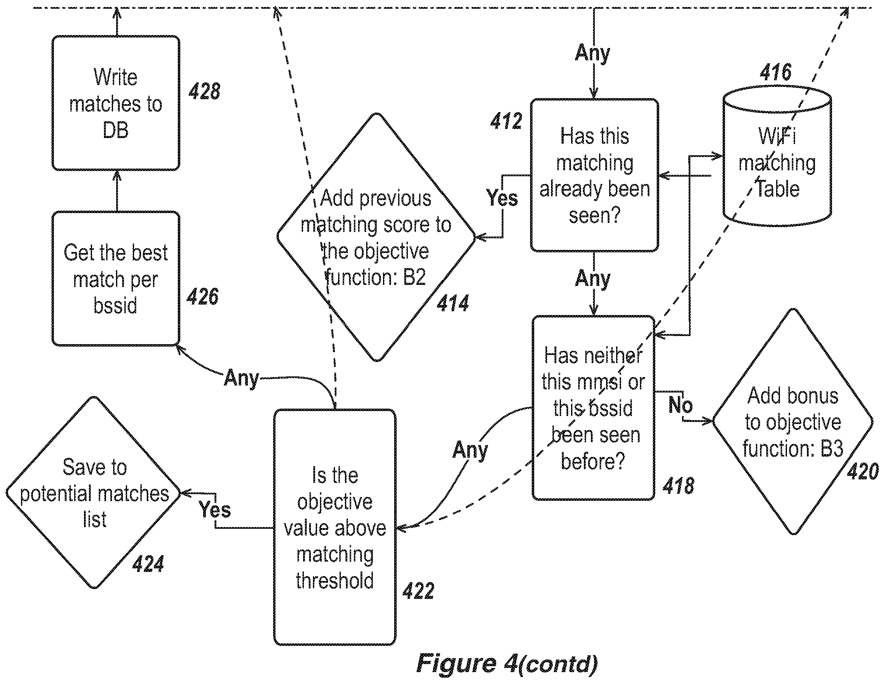

In order to increase certainty in respect of a match, an objective function may be used, which is now described in connection with flow chart 400 of Figure 4. In particular, the objective function aims to determine the best matching AIS and/or radar indicated trajectories to the detected Wi-Fi access points.

The objective function can be defined as:

$$O(match, t) = f(B_1, B_2, B_3)$$

Where O(match, t) is the objective function of the match at time t, and $B_1$, $B_2$ and $B_3$ are contributing factors.

$B_1$ is the contributing factor given the greatest weight. If not sufficiently high, the match will not be considered. $B_1$ is defined as the proportion of time spent at the right place at the right time during the Wi-Fi connection. Radar and/or AIS data is obtained from a mixed sources fusion table 402, and the indicated trajectories are discretised 404. For a given Basic Service Set Identifier (BSSID) indicated by a Wi-Fi access point, which are iterated over 432 in the process 400, the communication time between each access point and each of the antennas is determined 434, and compared to the trajectories indicated by radar and/or AIS 406.

Next, it is determined if the trajectories indicated by radar and/or AIS correspond to the Wi-Fi access point communication times and locations 408. If a correspondence is found, a value is added to $B_1$ 409. If a corre-

spondence is not found, the process skips to checking the next trajectory indicated by the radar and/or AIS data 410.

It is also determined if the correspondence, or match, has already been observed before 412, by querying a database, or Wi-Fi matching table 416. If it has, the previous matching score is added to the value of $B_2$.

$B_3$ is a contributor if both the Maritime Mobile Service Identity (MMSI), which may be indicated by AIS, for example, and the Basic Service Set Identifier (BSSID), or MAC address, which may be indicated by the detected Wi-Fi signal, of the match have never been seen before 418. If they both appear at the same time, they are more likely to be a match, such that $B_3$ may be added to the objective function as a bonus value 420.

Finally, it is determined if the objective function, which is the sum of $B_1$, $B_2$, and $B_3$, is above a matching threshold 422. If it is above the threshold level, the result is saved to a potential matches list 424. The best matches in respect of each BSSID are determined 426, and the matches are written to a database 428 and stored in a Wi-Fi matching table 430. The process is iteratively repeated in respect of each BSSID 432.

Alternatively, the objective function may be a non-linear function with respect to the contributing factors. The objective function may also be a linear addition or a weighted linear addition of the contributing factors.

Instead of Wi-Fi access points, the RF antenna could be configured to scan for mobile phone signals, with a similar process performed.

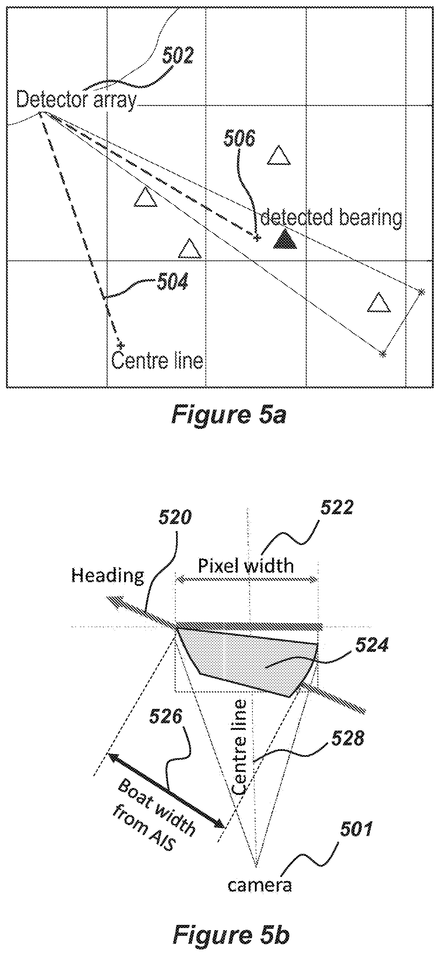

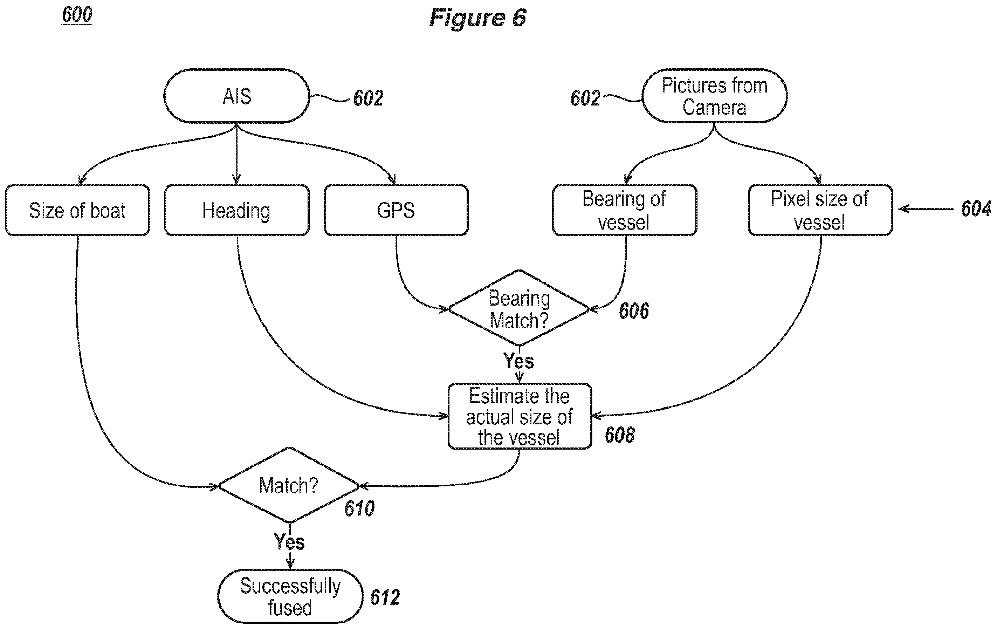

In order to compare a wider range of attributes than is possible based on the raw data obtained from each detector in isolation, the data from the detectors may be fused, as will now be discussed in connection with Figures 5a, 5b and 6.

Figure 5a illustrates a vessel detection using a detector array 502 which, in the exemplary embodiment, includes a light sensor in the form of a camera for capturing visible light images, and an AIS receiver. The detector array 502 is positioned on the shore, and arranged with a centre line of detection 504. As shown in Figure 5a, a vessel is detected on bearing 506. As shown in Figure 5b, the camera captures an image of the vessel 524 along centre line 528, which has a width in the image data, or a pixel width 522 (i.e. the width of the vessel in terms of the number of pixels across the width of the vessel in the image). The AIS receiver may also receive data in relation to a vessel detection, including the width of that vessel, or boat 526.

Figure 6 is a flow diagram of a method of determining a match, or consensus, between the data obtained by the AIS receiver and by the camera 602 of the detector array 502 shown in Figure 5a. Each detector provides information of particular types 604, or attributes, including the size of the vessel, the heading of the vessel, and Global Positioning System (GPS) coordinates of the vessel from AIS, and the bearing of the vessel, and the pixel size, or pixel width, of the vessel from the camera images, as described above. Firstly, it is determined if the bearing of the vessel relative to the detector array as indicated by the image obtained by the camera matches with the GPS position indicated by AIS 606. If a match is found, such as if there is correspondence to within a predetermined threshold level (10°, for example), the process proceeds to the next match determination 608. In the next step, data from each detector is fused in order to determine further vessel attributes. As the vessel 520, or boat, may be pointing in a direction other than perpendicular to the centre line 528, according to the heading of the vessel 520, the pixel width may not be directly representative of the actual width of the vessel 520. Thus, the pixel width of the vessel 522 as determined by the image data captured by the camera (as shown in Figure 5b) is combined with the heading as indicated by AIS. Consequently, an estimate of the actual size of the vessel can be determined 608. Next, it is determined if the estimate of the vessel size 608 based on the image data obtained by the camera matches with the vessel size as indicated by AIS 608. If a match is found to exist, the data from each detector is successfully fused 612, and it is determined that the vessel observed by the camera corresponds to the vessel detected by AIS.

In this way, it can be determined with increased confidence that the information indicated by AIS is accurate, rather than spoofed, and that the detection by the camera is indeed a vessel, with that vessel's identity known from AIS. Consequently, information obtained by both the camera and AIS receiver in respect of the same vessel can be combined and stored, to track the vessel, and to inform future detections. By fusing data from multiple sources, and by matching different vessel attributes, the confidence in vessel detections can be increased, and more reliable information about the vessel can be ascertained.

The detection may also trigger actions such as triggering an audible and/or visual alert for an operator, which may be local to the detector array or at a remote location; sending a message to an operator; tasking another detector to search for the vessel; and/or instructing a drone to investigate the vessel. The detection of the vessel may be shown on a display, and information determined about that vessel, such as its type, position, track and/or heading, may also be presented on the display.

*Low light and night detection of vessels*

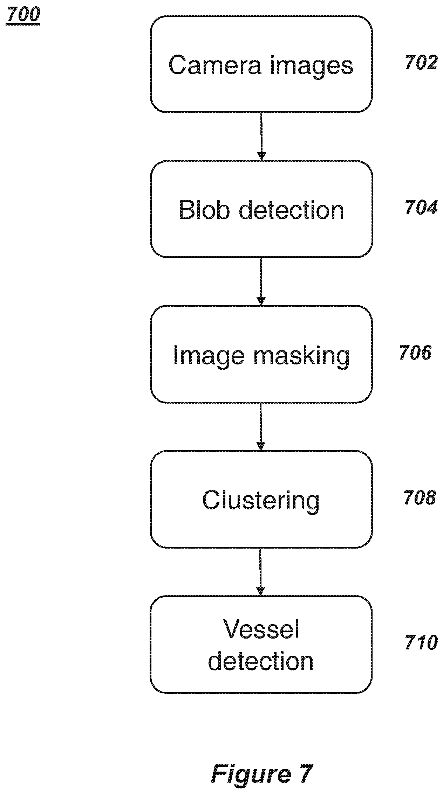

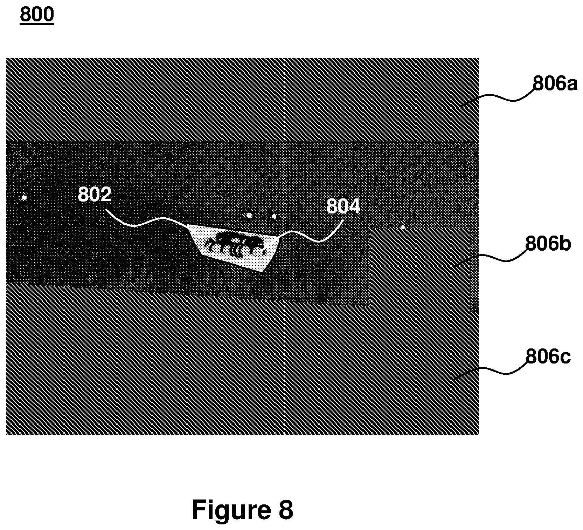

The present disclosure also relates to a method for detecting vessels in low light or night time conditions, using image data, which will now be discussed in connection with Figures 7 and 8.

As shown in the flow diagram of Figure 7, the method 700 utilises image data captured by a light sensor, or camera 702. The image data may be based on visible light, infrared or thermal imaging. Blobs within the image data are then detected 704 using a blob detection algorithm, such as the Laplacian of Gaussian algorithm, which is selected for its robustness against variations in lighting and weather conditions. As the person skilled in the art will appreciate, alternative blob detection algorithms, such as the difference of Gaussians, the determinant of the Hessian, or the hybrid Laplacian and determinant of the Hessian operator, could be used.

Blob detection refers to the imaging processing technique of identifying regions of image data that differ in properties, such as brightness or colour, relative to the background or surrounding regions. For instance, a blob may be a bright region against a dark background. Thus, blob detection can identify light sources or light reflections, that could come from a vessel.

Next, an image mask is applied to the image data 706, in order to remove regions of the image data that are associated with having static objects, and to retain the remaining portions of the image data. Image masking may be used to set all pixel values in certain regions of an image to have a particular value, such as zero, in order to remove those regions and retain desired parts of an image. For instance, a distant town or city in the field of view, a pier, the nearby shore, or the moon, may be sources of light that could trigger a blob detection. In this way, false detections which may occur in regions where a vessel would not be expected, such as in the sky or on land, can be avoided. In other words, the image mask ensures that only regions of the image depicting the sea are retained.

Clusters of the detected plurality of blobs within the retained image data are then identified 708. Clustering refers to the identification of closely spaced or nearby blobs, which may be from the same object. For instance, a number of light sources may be present on a single vessel, with each light source resulting in a detection of a blob.

A Density Based Spatial Clustering of Applications and Noise (DBSCAN) algorithm is used to identify the clusters of blobs. Advantageously, the DBSCAN algorithm is robust to outliers. As will be appreciated by the person skilled in the art, alternative clustering algorithms may also be used.

On the basis of the identified clusters in the retained image region, the presence of one more vessels is detected 710. Advantageously, the method allows for vessels to be detected even in low light or night conditions.

The step of determining the presence of one or more vessels based on the one or more clusters can include determining if the clusters have one or more of a size, shape, speed and/or track that is indicative of a vessel. For example, a cluster having a track, or trajectory, along a known shipping lane is likely to be a vessel. The track may be compared against known shipping lanes by querying a data set of known shipping lanes. Similarly, vessels of a variety of types and sizes may also be stored in a data set for comparison against detected cluster sizes, shapes and speed of movement. The comparison against known data may include determining if a correspondence exists to within a predetermined threshold level.

Having determined the presence of one or more vessels, a bounding box can be drawn around each of the one or more vessels in an image represented by the image data, in order to indicate, for future reference, that a vessel is present.

Figure 8 illustrates a diagrammatic example of a captured image 800 of a vessel 802. The outline of the vessel 802 is shown for illustrative purposes, but may not be visible in low light conditions. A cluster of blobs 804 is detected where the vessel 802 is located. The blobs may be the result of light reflections or light sources on the vessel itself.

An image mask 806 has been applied to the image, as illustrated by the hashed portions. The mask includes a region 806a to remove the sky, in order to avoid spurious detections, such as from the moon or from aircraft. The foreground has also been removed with mask region 806c, to eliminate detections caused by nearby reflections. Another mask region 806b is applied to remove a pier that is in view. Consequently, false detections are avoided, whilst the image regions depicting the sea are retained.

By analysing the size, shape and/or movement of the cluster 804 as described above, it can be determined that the cluster 804 is indicative of a vessel 802, even in low light or night conditions.

It will be understood that the benefits and advantages described above may relate to one embodiment or may relate to several embodiments. The embodiments are not limited to those that solve any or all of the stated problems or those that have any or all of the stated benefits and advantages. Unless otherwise indicated each embodiment as described herein may be combined with another embodiment as described herein.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, hard-drives, thumb drives, memory cards, etc. and do not include propagated signals. The software can be suitable for execution on a parallel processor or a serial processor such that the method steps may be carried out in any suitable order, or simultaneously. This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilizing conventional techniques known to those skilled in the art that all, or a portion of the software instructions may be carried out by a dedicated circuit, such as a DSP (Digital Signal Processor), programmable logic array, or the like.

The steps of the methods described herein may be carried out in any suitable order, or simultaneously where appropriate. Additionally, individual steps may be deleted from any of the methods without departing from the scope of the subject matter described herein. Aspects of any of the examples described above may be combined with aspects of any of the other examples described to form further examples without losing the effect sought. Any of the steps or processes described above may be implemented in hardware or software.

It will be understood that the above descriptions of preferred embodiments are given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

The headings used herein are for organizational purposes only and are not meant to be used to limit the scope of the description. As used throughout this application, the word "may" is used in a permissive sense (i.e. meaning "might") rather than the mandatory sense (i.e., meaning "must"). Similarly, the words "include", "including", and "includes" mean including, but not limited to. The term "comprising" encompasses "including" as well as "consisting" e.g. a composition "comprising" X may consist exclusively of X or may include something additional e.g. X + Y.

**Claims**

1. A computer implemented method for detecting vessels, the method comprising:

   determining if a match exists between an object detection from each of two or more detectors, based on data obtained by the two or more detectors,
   wherein the two or more detectors comprise:

(i) an RF antenna (102, 302); and
(ii) a radar detector (106) and/or an Automatic Identification System, AIS, receiver (108),

wherein the RF antenna (102, 302) comprises a plurality of RF antennas, and wherein the plurality of RF antennas are arranged with a plurality of adjacent detection ranges (304a-h),
wherein it is determined that a vessel is detected if it is determined that the match exists, wherein the step of determining if a match exists comprises:

determining if an RF signal has been detected in two or more of the plurality of adjacent detection ranges (304a-h) based on the data obtained by the plurality of RF antennas (102, 302); and
identifying a potential vessel track that corresponds to the detected RF signal in the two or more of the plurality of adjacent detection ranges, wherein the potential vessel track is indicated by the data obtained by the radar detector (106) and/or the AIS receiver (108).

2. The method of claim 1, wherein the match is further in respect of position, bearing relative to the detectors, speed, size, and/or heading of the object.

3. The method of claim 1 or 2, wherein the step of determining if a match exists further comprises:

determining an object position associated with each object detection based on the data obtained by the respective detector of the two or more detectors; and
determining if two or more of the determined object positions associated with each object detection correspond to within a predetermined position threshold level.

4. The method of claim 3, wherein the predetermined position threshold level is 500m.

5. The method of any preceding claim, wherein the step of determining if a match exists further comprises:

determining an object speed associated with each object detection based on the data obtained by the respective detector of the two or more detectors; and
determining if two or more of the determined object speeds associated with each object detection correspond to within a speed threshold level.

6. The method of claim 5, wherein the speed threshold level is 25% of the maximum of the determined object speeds.

7. The method of any preceding claim, wherein the step of determining if a match exists further comprises:

determining an object heading associated with each object detection based on the data obtained by the respective detector of the two or more detectors; and
determining if two or more of the determined object headings associated with each object detection correspond to within a predetermined heading threshold level, optionally wherein the predetermined heading threshold level is 45°.

8. The method of any preceding claim, wherein the step of determining if a match exists further comprises:

determining an object bearing associated with each object detection based on the data obtained by the respective detector of the two or more detectors, wherein the object bearing is relative to the two or more detectors; and
determining if two or more of the determined object bearings associated with each object detection correspond to within a predetermined bearing threshold level, optionally wherein the predetermined bearing threshold level is 10°.

9. The method of any preceding claim, wherein the step of determining if a match exists further comprises:

determining an object track associated with each object detection based on the data obtained by the respective detector of the two or more detectors; and
determining if two or more of the determined object tracks associated with each object detection correspond to within a predetermined track threshold level during a predetermined time interval, optionally wherein the predetermined track threshold level is 500m.

10. The method of any preceding claim, wherein the step of identifying a potential vessel track that corresponds to the detected RF signal in the two or more of the plurality of adjacent detection ranges comprises:
determining that the potential vessel track corresponds to a time and/or a position of the detection of the RF signal in each of the two or more of the plurality of adjacent detection ranges.

11. The method of any preceding claim, wherein the two or more detectors further comprise:

a light sensor (104); and
the AIS receiver (108),

wherein the step of determining if a match exists further comprises:

estimating an object size based on a pixel width of the object in image data captured by the light sensor (104) and based on a heading of the object as indicated by the data obtained by the AIS receiver (108); and
determining if the estimation of the object size matches a vessel size of the object as indicated by the data obtained by AIS receiver.

12. The method of claim 11, wherein the step of determining if the estimation of the object size matches the vessel size as indicated by the AIS receiver (108) comprises determining if the estimation of the object size corresponds to the vessel size as indicated by the AIS receiver to within a predetermined vessel size threshold level.

13. The method of any preceding claim, wherein, having detected the vessel, the method further comprises:

instructing the two or more detectors to obtain further data on the vessel; and
verifying the detection of the vessel and/or tracking movement of the detected vessel based on the obtained further data; and/or
instructing a further detector positioned in the trajectory of the vessel to obtain subsequent data in respect of the vessel, and
tracking movement of the detected vessel based on the subsequent data.

14. The method of any preceding claim, wherein, upon detecting the vessel, the method further comprises:

triggering an audible and/or visual alert;
sending a message to an operator;
tasking another detector to search for the vessel; and/or
instructing a drone to investigate the vessel.

15. A system (100) comprising:

a processor (110) configured to carry out the method of any preceding claim; and
the two or more detectors.

**Patentansprüche**

1. Computerimplementiertes Verfahren zum Detektieren von Wasserfahrzeugen, das Verfahren umfassend:

Bestimmen, ob eine Übereinstimmung zwischen einer Objektdetektion von jedem von zwei oder mehr Detektoren besteht, basierend auf von den zwei oder mehr Detektoren erhaltenen Daten,
wobei die zwei oder mehr Detektoren umfassen:

(i) eine RF-Antenne (102, 302); und
(ii) einen Radardetektor (106) und/oder einen Empfänger eines automatischen Identifizierungssystems (AIS) (108), wobei die RF-Antenne (102, 302) eine Vielzahl von RF-Antennen umfasst, und wobei die Vielzahl von RF-Antennen mit einer Vielzahl benachbarter Detektionsbereiche (304a-h) angeordnet ist,

wobei bestimmt wird, dass ein Wasserfahrzeug detektiert ist, wenn bestimmt wird, dass die Übereinstimmung besteht, wobei der Schritt des Bestimmens, ob eine Übereinstimmung besteht, umfasst:

Bestimmen, ob ein RF-Signal in zwei oder mehr der Vielzahl benachbarter Detektionsbereiche (304a-h) basierend auf den von der Vielzahl von RF-Antennen (102, 302) erhaltenen Daten detektiert worden ist; und
Identifizieren einer potenziellen Wasserfahrzeugspur, die dem detektierten RF-Signal in den zwei oder mehr der Vielzahl benachbarter Detektionsbereiche entspricht, wobei die potenzielle Wasserfahrzeugspur durch die von dem Radardetektor (106) und/oder dem AIS-Empfänger (108) erhaltenen Daten angezeigt wird.

2. Verfahren nach Anspruch 1, wobei sich die Übereinstimmung ferner auf Position, Peilung relativ zu den Detektoren, Geschwindigkeit, Größe und/oder Kurs des Objekts bezieht.

3. Verfahren nach Anspruch 1 oder 2, wobei der Schritt des Bestimmens, ob eine Übereinstimmung besteht, ferner umfasst:

Bestimmen einer Objektposition, die jeder Objektdetektion zugeordnet ist, basierend auf den von dem jeweiligen Detektor der zwei oder mehr Detektoren erhaltenen Daten; und
Bestimmen, ob zwei oder mehr der bestimmten Objektpositionen, die jeder Objektdetektion zugeordnet sind, innerhalb eines vorbestimmten Positionsschwellenwerts eine Entsprechung aufweisen.

4. Verfahren nach Anspruch 3, wobei der vorbestimmte Positionsschwellenwert 500 m beträgt.

5. Verfahren nach einem der vorhergehenden Ansprüche, wobei der Schritt des Bestimmens, ob eine Übereinstimmung besteht, ferner umfasst:

Bestimmen einer Objektgeschwindigkeit, die jeder Objektdetektion zugeordnet ist, basierend auf den von dem jeweiligen Detektor der zwei oder mehr Detektoren erhaltenen Daten; und Bestimmen, ob zwei oder mehr der bestimmten Objektgeschwindigkeiten, die jeder Objektdetektion zugeordnet sind, innerhalb eines Geschwindigkeitsschwellenwerts eine Entsprechung aufweisen.

6. Verfahren nach Anspruch 5, wobei der Geschwindigkeitsschwellenwert 25% des Maximums der bestimmten Objektgeschwindigkeiten beträgt.

7. Verfahren nach einem der vorhergehenden Ansprüche, wobei der Schritt des Bestimmens, ob eine Übereinstimmung besteht, ferner umfasst:

Bestimmen eines Objektkurses, der jeder Objektdetektion zugeordnet ist, basierend auf den von dem jeweiligen Detektor der zwei oder mehr Detektoren erhaltenen Daten; und Bestimmen, ob zwei oder mehr der bestimmten Objektkurse, die jeder Objektdetektion zugeordnet sind, innerhalb eines vorbestimmten Kursschwellenwerts eine Entsprechung aufweisen, wobei optional der vorbestimmte Kursschwellenwert 45° beträgt.

8. Verfahren nach einem der vorhergehenden Ansprüche, wobei der Schritt des Bestimmens, ob eine Übereinstimmung besteht, ferner umfasst:

Bestimmen einer Objektpeilung, die jeder Objektdetektion zugeordnet ist, basierend auf den von dem jeweiligen Detektor der zwei oder mehr Detektoren erhaltenen Daten, wobei die Objektpeilung relativ zu den zwei oder mehr Detektoren ist; und Bestimmen, ob zwei oder mehr der bestimmten Objektpeilungen, die jeder Objektdetektion zugeordnet sind, innerhalb eines vorbestimmten Peilungsschwellenwerts eine Entsprechung aufweisen, wobei optional der vorbestimmte Peilungsschwellenwert 10° beträgt.

9. Verfahren nach einem der vorhergehenden Ansprüche, wobei der Schritt des Bestimmens, ob eine Übereinstimmung besteht, ferner umfasst:

Bestimmen einer Objektspur, die jeder Objektdetektion zugeordnet ist, basierend auf den von dem jeweiligen Detektor der zwei oder mehr Detektoren erhaltenen Daten; und Bestimmen, ob zwei oder mehr der bestimmten Objektspuren, die jeder Objektdetektion zugeordnet sind, innerhalb eines vorbestimmten Spurenschwellenwerts während eines vorbestimmten Zeitintervalls eine Entsprechung aufweisen, wobei optional der vorbestimmte Spurenschwellenwert 500 m beträgt.

10. Verfahren nach einem der vorhergehenden Ansprüche, wobei der Schritt des Identifizierens einer potenziellen Wasserfahrzeugspur, die dem detektierten RF-Signal in zwei oder mehr der Vielzahl benachbarter Detektionsbereiche entspricht, umfasst: Bestimmen, dass die potenzielle Wasserfahrzeugspur einer Zeit und/oder einer Position der Detektion des RF-Signals in jedem der zwei oder mehr der Vielzahl benachbarter Detektionsbereiche entspricht.

11. Verfahren nach einem der vorhergehenden Ansprüche, wobei die zwei oder mehr Detektoren ferner umfassen:

einen Lichtsensor (104); und den AIS-Empfänger (108), wobei der Schritt des Bestimmens, ob eine Übereinstimmung besteht, ferner umfasst:

Schätzen einer Objektgröße basierend auf einer Pixelbreite des Objekts in von dem Lichtsensor (104) erfassten Bilddaten und basierend auf einem Kurs des Objekts, wie durch die von dem AIS-Empfänger (108) erhaltenen Daten angezeigt; und Bestimmen, ob die Schätzung der Objektgröße mit einer Wasserfahrzeuggröße des Objekts übereinstimmt, wie durch die von dem AIS-Empfänger erhaltenen Daten angezeigt.

12. Verfahren nach Anspruch 11, wobei der Schritt des Bestimmens, ob die Schätzung der Objektgröße mit der durch den AIS-Empfänger (108) angezeigten Wasserfahrzeuggröße übereinstimmt, umfasst, zu bestimmen, ob die Schätzung der Objektgröße innerhalb eines vorbestimmten Wasserfahrzeuggrößenschwellenwerts der durch den AIS-Empfänger angezeigten Wasserfahrzeuggröße entspricht.

13. Verfahren nach einem der vorhergehenden Ansprüche, wobei das Verfahren nach dem Detektieren des Wasserfahrzeugs ferner umfasst:

Anweisen der zwei oder mehr Detektoren, weitere Daten über das Wasserfahrzeug zu erfassen; und Verifizieren der Detektion des Wasserfahrzeugs und/oder Verfolgen einer Bewegung des detektierten Wasserfahrzeugs basierend auf den erfassten weiteren Daten; und/oder

Anweisen eines weiteren Detektors, der in der Trajektorie des Wasserfahrzeugs positioniert ist, nachfolgende Daten in Bezug auf das Wasserfahrzeug zu erfassen; und

Verfolgen einer Bewegung des detektierten Wasserfahrzeugs basierend auf den nachfolgenden Daten.

14. Verfahren nach einem der vorhergehenden Ansprüche, wobei das Verfahren beim Detektieren des Wasserfahrzeugs ferner umfasst:

Auslösen eines akustischen und/oder visuellen Alarms;

Senden einer Nachricht an einen Bediener;

Beauftragen eines weiteren Detektors, nach dem Wasserfahrzeug zu suchen; und/oder

Anweisen einer Drohne, das Wasserfahrzeug zu untersuchen.

15. System (100), umfassend:

einen Prozessor (110), der konfiguriert ist, das Verfahren nach einem der vorhergehenden Ansprüche auszuführen; und

die zwei oder mehr Detektoren.

## Revendications

1. Procédé mis en œuvre par ordinateur pour détecter des navires, le procédé comprenant l'étape suivante :

déterminer si une concordance existe entre une détection d'objet provenant de chacun de deux ou plus de deux détecteurs, sur la base de données obtenues par les deux ou plus de deux détecteurs,

dans lequel les deux ou plus de deux détecteurs comprennent :

(i) une antenne RF (102, 302) ; et

(ii) un détecteur radar (106) et/ou un récepteur de système d'identification automatique, Automatic Identification System AIS, (108),

dans lequel l'antenne RF (102, 302) comprend une pluralité d'antennes RF, et dans lequel la pluralité d'antennes RF sont agencées avec une pluralité de portées de détection adjacentes (304a-h),

dans lequel il est déterminé qu'un navire est détecté s'il est déterminé que la concordance existe, dans lequel l'étape consistant à déterminer si une concordance existe comprend les étapes suivantes :

déterminer si un signal RF a été détecté dans deux ou plus de deux de la pluralité de portées de détection adjacentes (304a-h) sur la base des données obtenues par la pluralité de antennes RF (102, 302) ; et identifier une route de navire potentielle qui correspond au signal RF détecté dans les deux ou plus de deux de la pluralité de portées de détection adjacentes, dans lequel la route de navire potentielle est indiquée par les données obtenues par le détecteur radar (106) et/ou le récepteur AIS (108).

2. Procédé de la revendication 1, dans lequel la concordance est en outre en ce qui concerne une position, un relèvement relatif aux détecteurs, une vitesse, une taille, et/ou un cap de l'objet.

3. Procédé de la revendication 1 ou 2, dans lequel l'étape consistant à déterminer si une concordance existe comprend en outre les étapes suivantes :

déterminer une position d'objet associée à chaque détection d'objet sur la base des données obtenues par le détecteur respectif des deux ou plus de deux détecteurs ; et déterminer si deux ou plus de deux des positions d'objet déterminées associées à chaque détection d'objet correspondent aux limites d'un niveau seuil de position prédéterminé.

4. Procédé de la revendication 3, dans lequel le niveau seuil de position prédéterminé est de 500 m.

5. Procédé d'une quelconque revendication précédente, dans lequel l'étape consistant à déterminer si une concordance existe comprend en outre les étapes suivantes :

déterminer une vitesse d'objet associée à chaque détection d'objet sur la base des données obtenues par le détecteur respectif des deux ou plus de deux détecteurs ; et déterminer si deux ou plus de deux des vitesses d'objet déterminées associées à chaque détection d'objet correspondent aux limites d'un niveau seuil de vitesse.

6. Procédé de la revendication 5, dans lequel le niveau seuil de vitesse est de 25 % du maximum des vitesses d'objet déterminées.

7. Procédé d'une quelconque revendication précédente, dans lequel l'étape consistant à déterminer si une concordance existe comprend en outre les étapes suivantes :

déterminer un cap d'objet associé à chaque détection d'objet sur la base des données obtenues par le détecteur respectif des deux ou plus de deux détecteurs ; et

déterminer si deux ou plus de deux des caps d'objet déterminés associés à chaque détection d'objet correspondent aux limites d'un niveau seuil de cap prédéterminé, facultativement dans lequel le niveau seuil de cap prédéterminé est de 45°.

8. Procédé d'une quelconque revendication précédente, dans lequel l'étape consistant à déterminer si une concordance existe comprend en outre les étapes suivantes :

déterminer un relèvement d'objet associé à chaque détection d'objet sur la base des données obtenues par le détecteur respectif des deux ou plus de deux détecteurs, dans lequel le relèvement d'objet est relatif aux deux ou plus de deux détecteurs ; et

déterminer si deux ou plus de deux des relèvements d'objet déterminés associés à chaque détection d'objet correspondent aux limites d'un niveau seuil de relèvement prédéterminé, facultativement dans lequel le niveau seuil de relèvement prédéterminé est de 10°.

9. Procédé d'une quelconque revendication précédente, dans lequel l'étape consistant à déterminer si une concordance existe comprend en outre les étapes suivantes :

déterminer une route d'objet associée à chaque détection d'objet sur la base des données obtenues par le détecteur respectif des deux ou plus de deux détecteurs ; et

déterminer si deux ou plus de deux des routes d'objet déterminées associées à chaque détection d'objet correspondent aux limites d'un niveau seuil de route prédéterminé durant un intervalle de temps prédéterminé, facultativement dans lequel le niveau seuil de route prédéterminé est de 500 m.

10. Procédé d'une quelconque revendication précédente, dans lequel l'étape consistant à identifier une route de navire potentielle qui correspond au signal RF détecté dans les deux ou plus de deux de la pluralité de portées de détection adjacentes comprend l'étape suivante :

déterminer que la route de navire potentielle correspond à un moment et/ou à une position de la détection du signal RF dans chacune des deux ou plus de deux de la pluralité de portées de détection adjacentes.

11. Procédé d'une quelconque revendication précédente, dans lequel les deux ou plus de deux détecteurs comprennent en outre :

un capteur de lumière (104) ; et
le récepteur AIS (108),
dans lequel l'étape consistant à déterminer si une concordance existe comprend en outre les étapes suivantes :

estimer une taille d'objet sur la base d'une largeur de pixel de l'objet dans des données d'image capturées par le capteur de lumière (104) et sur la base d'un cap de l'objet tel qu'indiqué par les données obtenues par le récepteur AIS (108) ; et

déterminer si l'estimation de la taille d'objet est en concordance avec une taille de navire de l'objet telle qu'indiquée par les données obtenues par le récepteur AIS.

12. Procédé de la revendication 11, dans lequel l'étape consistant à déterminer si l'estimation de la taille d'objet est en concordance avec à la taille de navire telle qu'indiquée par le récepteur AIS (108) comprend l'étape consistant à déterminer si l'estimation de la taille d'objet correspond à la taille de navire telle qu'indiquée par le récepteur AIS dans les limites d'un niveau seuil de taille de navire prédéterminé.

13. Procédé d'une quelconque revendication précédente, dans lequel, ayant détecté le navire, le procédé comprend en outre les étapes suivantes :

donner l'instruction aux deux ou plus de deux détecteurs d'obtenir des données supplémentaires sur le navire ; et

vérifier la détection du navire et/ou d'un mouvement de suivi du navire détecté sur la base des données supplémentaires obtenues ; et/ou

donner l'instruction à un détecteur supplémentaire positionné dans la trajectoire du navire d'obtenir des données subséquentes en ce qui concerne le navire, et

suivre le mouvement du navire détecté sur la base des données subséquentes.

14. Procédé d'une quelconque revendication précédente, dans lequel, lors de la détection du navire, le procédé comprend en outre les étapes suivantes :

déclencher une alerte audible et/ou visuelle ;
envoyer un message à un opérateur ;
charger un autre détecteur de rechercher le navire ; et/ou
donner l'instruction à un drone d'examiner le navire.

**15.** Système (100), comprenant :

un processeur (110) configuré pour effectuer le procédé d'une quelconque revendication précédente ; et
les deux ou plus de deux détecteurs.

*100*

*101*

*102*

*104*

*106*

*108*

RF
antenna

Light
sensor

Radar
detector

AIS
receiver

*112*

*110*

Processor

*Figure 1*

Obtain data from each of two or more detectors — *202*

Identify object detections in the obtained data — *204*

Determine if a match exists between two or more of the object detections — *206*

Yes

Vessel detected — *208*

*Figure 2*

*Figure 3*

Figure 4

**Figure 4(contd)**

*Figure 5a*

*Figure 5b*

**Figure 6**

600

_700_

```
┌─────────────────────┐
│                     │
│   Camera images     │   702
│                     │
└─────────────────────┘
           │
           ▼
┌─────────────────────┐
│                     │
│   Blob detection    │   704
│                     │
└─────────────────────┘
           │
           ▼
┌─────────────────────┐
│                     │
│   Image masking     │   706
│                     │
└─────────────────────┘
           │
           ▼
┌─────────────────────┐
│                     │
│     Clustering      │   708
│                     │
└─────────────────────┘
           │
           ▼
┌─────────────────────┐
│       Vessel        │
│                     │   710
│     detection       │
└─────────────────────┘
```

_Figure 7_

**Figure 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011138744 A2
- EP 3109659 A1

- US 2017168133 A1